# EUROPÄISCHE PATENTSCHRIFT

(11) **EP 3 790 769 B1**
(45) Veröffentlichungstag und Bekanntmachung des Hinweises auf die Patenterteilung: **25.02.2026**
(21) Anmeldenummer: 19726583.8
(22) Anmeldetag: 06.05.2019
(51) Int. Cl.: H02G 3/04, B60R 16/02

(54) **VORRICHTUNG ZUR AUFNAHME EINES KABELSTRANGS**
DEVICE FOR ACCOMMODATING A CABLE ASSEMBLY
DISPOSITIF DE RÉCEPTION D'UNE FAISCEAU DE CÂBLE

(30) Priorität: 07.05.2018 DE 102018003688
(43) Veröffentlichungstag der Anmeldung: 17.03.2021
(73) Patentinhaber: A. Raymond et Cie, 38000 Grenoble (FR)
(72) Erfinder: TAUSENDFREUND, Thomas, 79588 Efringen-Kirchen (DE); GLAGAU, Andreas, 79650 Schopfheim (DE); JUNGE, Andy, 79400 Kandern (DE); KRÜGER, Franziska, 79618 Rheinfelden (DE); KOLB, Christian, 79589 Binzen (DE)
(74) Vertreter: Hoffmann Eitle
(86) Internationale Anmeldenummer: PCT/EP2019/061536
(87) Internationale Veröffentlichungsnummer: WO 2019/215077

(56) Entgegenhaltungen:
- EP-A1- 2 579 404
- DE-A1- 10 318 635
- US-A1- 2016 040 822
- US-A1- 2017 331 263

## Beschreibung

Die Erfindung betrifft eine Vorrichtung zur Aufnahme eines länglichen Elements gemäß dem Oberbegriff des Anspruchs 1. Ferner betrifft die Erfindung ein System aus Vorrichtung und Kabelstrang.

Aus dem Stand der Technik sind Vorrichtungen zur Aufnahme eines Kabelstrangs bekannt. Sie weisen zumeist ein Umhüllung, in die der Kabelstrang aufgenommen wird, und einen Deckel, auf. Die Umhüllung ist in der Regel ein Gehäuse. Der Deckel wird mit dem Gehäuse mittels eines Verschlusses verschlossen. Der Verschluss besteht dabei aus einer Aufnahme und einem Einfügestück, das dazu vorgesehen ist, in die Aufnahme eingefügt zu werden, um den Verschluss zu schließen. Die Aufnahme ist mit dem Gehäuse und das Einfügestück mit dem Deckel verbunden. Die Aufnahme aus dem Stand der Technik ist ähnlich einem Ringsegment geformt, das an beiden Enden mit dem Gehäuse verbunden ist. Bei Vorrichtungen zur Aufnahme eines Kabelstrangs sind die Aufnahme und das Gehäuse meist aus Kunststoff und werden einstückig gegossen. Hierbei fließt der Gusswerkstoff zunächst in die Gussform für das Gehäuse und dann weiter in die Gussform für die ringsegmentförmige Aufnahme. Dabei dringt der Gusswerkstoff in die Form für die Aufnahme über die zwei Enden der Aufnahme, wobei sich die Teilströme, die dabei entstehen, sich ungefähr in der Mitte der Form für die Aufnahme treffen. An dieser Stelle entsteht bei der später fertigen Aufnahme eine Bindenaht, die zur Folge hat, dass die Aufnahme an dieser Stelle besonders bruchgefährdet ist. Dies ist besonders nachteilig, da Aufnahmen mitunter hohen Betriebskräften ausgesetzt sind. Einen festen Verschluss können herkömmliche Vorrichtungen zur Aufnahme von Kabelsträngen unter solchen Bedingungen nicht gewährleisten. Neben hohen Betriebskräften erhöhen insbesondere auch niedrige Temperaturen die Bruchgefahr bei aus dem Stand der Technik bekannten Vorrichtungen. Im Gegensatz dazu hat sich gezeigt, dass die erfindungsgemäße Vorrichtung auch bei niedrigen Temperaturen einen sichereren Verschluss als vergleichbare herkömmliche Vorrichtungen gewährleistet.

US 2016 040 822 bezweckt den Schutz von Schläuchen, die in einer Vorrichtung befestigt sind, vor einem bewegten Objekt, das auf die Vorrichtung auftrifft, mittels eines Hakenelements, das sich von der Vorrichtung aus erstreckt. Die Vorrichtung umfasst ein Gehäuse, das eine Außenfläche und einen Durchgang aufweist. Der Durchgang ist so konfiguriert, dass er den Schlauch aufnimmt, und erstreckt sich von einem ersten Ende zu einem zweiten Ende des Gehäuses. Das Hakenelement erstreckt sich von der Außenfläche des Gehäuses und ist so konfiguriert, dass es sich in das sich bewegende Objekt einhakt, um ein Schlauchstück zu schützen.

In US 2017 331 263 A1 ist ein Schutzvorrichtung offenbart. Die Schutzvorrichtung ist ausgestattet mit einem ersten Schutzteil für einen gebogenen Abschnitt, der einen horizontal gebogenen ersten gebogenen Teil einer Drahtgruppe schützt; einem zweiten Schutzteil für einen gebogenen Abschnitt, der einen nach unten gebogenen zweiten gebogenen Teil schützt; einem ersten Abdeckungsteil; einem zweiten Abdeckungsteil; und ein erstes Verriegelungsteil, wobei das erste Abdeckteil einstückig mit dem ersten Schutzteil für den gebogenen Abschnitt verbunden ist und geschlossen und verriegelt wird, und das zweite Abdeckteil einstückig mit dem ersten Abdeckteil ausgebildet ist und sich auf derselben Ebene wie dieses entwickelt und nach unten gebogen und geschlossen und verriegelt wird, nachdem das erste Abdeckteil geschlossen ist, und das zweite Abdeckteil mit einem zweiten Verriegelungsteil ausgestattet ist.

Aufgabe der vorliegenden Erfindung ist es daher, eine Vorrichtung zur Aufnahme von länglichen Elementen oder einem Verbund von länglichen Elementen vorzuschlagen, die einen zuverlässigeren Verschluss von Umhüllung und Deckel gewährleistet.

Diese Aufgabe wird durch die Vorrichtung gemäß Anspruch 1 gelöst. Vorteilhafte Ausführungsformen sind in den Unteransprüchen enthalten.

Grundgedanke der Erfindung ist es, die Form der Aufnahme im Vergleich zu den Formen von Aufnahmen aus dem Stand der Technik anders zu bilden und dadurch insbesondere eine Abkehr von der Ringsegmentform vorzunehmen, die sich bei gusstechnisch hergestellten Aufnahmen als bruchgefährdet erwiesen hat. Indem die Aufnahme einen Steg aufweist, der nur an seinem ersten Ende mit der Umhüllung verbunden ist und sich zum zweiten Ende hin von der Umhüllung weg erstreckt, fließt der Gusswerkstoff beim Gießen lediglich über ein Ende in die Form der Aufnahme. Indem die Aufnahme ferner zwei Seitensegmente aufweist, die jeweils an einem Ende mit dem Steg verbunden sind, sich zum anderen Ende hin vom Steg weg erstrecken und sich in unterschiedliche Richtungen erstrecken, zweigt sich der Strom des Gusswerkstoffes in zwei unterschiedliche Richtungen ab und die beiden Teilströme treffen sich nicht an einer anderen Stelle, sondern enden in den Formen für die jeweiligen Seitenabschnitte. Eine Bindenaht kann dadurch nicht entstehen und somit ist eine damit verbundene Bruchgefahr beseitigt.

Überraschenderweise hat sich darüber hinaus gezeigt, dass die erfindungsgemäße Vorrichtung höheren Belastungen standhalten kann als vergleichbare Vorrichtungen mit bekannten Aufnahmen und Einfügestücken, ohne dass dabei der Verschluss von Deckel und Umhüllung ungewollt gelöst wird. Besonders wirksam wirkt der Verschluss der erfindungsgemäßen Vorrichtung Torsionskräften entgegen, die bei vergleichbaren Vorrichtungen aus dem Stand der Technik zum Aufspringen des Schlosses führen können. Die Erfindung macht sich dabei die Erkenntnis zu Nutze, dass eine Torsion durch zwei entgegengesetzt gerichtete Drehmomente bewirkt wird und schlägt vor, zwei Rastelemente derart einzusetzen, dass zumindest eines der beiden bei Torsion der Vorrichtung im Eingriff bleibt, sodass der gesamte Verschluss sicher halten kann.

Der sichere Verschluss erlaubt es, die Umhüllung kompakt mit Kabeln zu befüllen. Selbst wenn die Umhüllung so kompakt befüllt ist, dass die Kabel bei verschlossenem Deckel von innen gegen den Deckel drücken, kann im Vergleich zu vergleichbaren Vorrichtungen aus dem Stand der Technik zuverlässiger gewährleistet werden, dass kein ungewolltes Öffnen des Deckels erfolgt. Das erlaubt eine platzsparende Vorrichtung und führt zu Materialersparnis. Insbesondere hat sich gezeigt, die Umhüllung zur Aufnahme von Kabelsträngen, die hohen Torsionskräften ausgesetzt sind, sicher verschlossen bleiben.

Die hohen Haltekräfte sind auch darauf zurückzuführen, dass das Einfügestück zwei Teilabschnitte aufweist und jeder Teilabschnitt ein Rastelement hat. Die Vorrichtung ist derart ausgebildet, dass das Einfügestück in das Haltestück einschiebbar ist, wobei sich dann der Steg zwischen den Teilabschnitten befindet und das Rastelement ein Herausschieben des Einfügestücks verhindern, wenn das Einfügestück soweit eingeschoben wird, bis jedes Rastelement einen Seitenabschnitt passiert hat.

Neben dem zuverlässigen Verschließen hat sich auch gezeigt, dass der Verschluss, der zwischen der neuartigen Aufnahme und dem Einfügestück zu Stande kommt, eine geringere Ausübung an Montagekraft erfordert als dies bei herkömmlichen Verschlüssen der Fall ist. Auch erfolgt die Montage einfach und es genügt das Vorhandensein einfacher Werkzeuge. Das führt zu einem geringeren Arbeits- und Zeitaufwand, somit zu geringeren Kosten.

Unter dem Begriff "Umhüllung" ist im Sinne der Erfindung eine Vorrichtung zu verstehen, die einen Raum nach außen abgrenzt, so dass der Raum mit Gegenständen befüllbar ist und die diese Vorrichtung somit zum Aufbewahren von Sachen dienen kann. Unter der Formulierung "nach außen abgrenzt" ist zu verstehen, dass zumindest eine Öffnung übrig bleibt, die durch den Deckel verschließbar ist. Die Formulierung "nach außen abgrenzt" umfasst auch Fälle, in denen mehrere Öffnungen vorgesehen sind.

In einer bevorzugten Ausführungsform ist die Umhüllung ein Gehäuse. Das Gehäuse dient insbesondere der Aufnahme eines länglichen Elements oder eines Verbundes von länglichen Elementen. Die Umhüllung, insbesondere das Gehäuse, kann aber auch ausgebildet sein, andere Sachen als längliche Elemente oder zusätzlich zu länglichen Elementen andere Sachen aufzunehmen.

Ein längliches Element kann beispielsweise ein Kabel oder eine Leitung sein. Ein Verbund von länglichen Elementen kann somit beispielsweise ein Kabelstrang sein. Ein Kabelstrang umfasst üblicherweise ein Bündel Kabel, die miteinander verbunden sein können oder nicht.

Das Gehäuse kann beispielsweise aus einem Boden und zwei Seitenwänden bestehen, die einen Innenraum für die Aufbewahrung der Kabel definieren. Ferner kann das Gehäuse beispielsweise eine Kastenform oder eine Halbrohrform aufweisen. Andere Formen, die aus dem Stand der Technik bekannt sind, sind denkbar.

Das Gehäuse nimmt bei vielen Anwendungen (z. B. in Fahrzeugen) nur einen Abschnitt eines Kabelstrangs auf, wobei sich der Rest des Kabelstrangs nicht im Gehäuse befindet. Für diese Anwendung muss das Gehäuse eine oder mehrere Öffnungen aufweisen, damit der nicht eingehauste Abschnitt des Kabelstrang aus dem Gehäuse ein- bzw. austreten kann oder damit das Gehäuse nur über diesen Abschnitt gelegt werden kann. Andernfalls ist es auch denkbar, dass das gesamte Gehäuse keine derartigen Öffnungen aufweist.

In einer alternativen Ausführungsform ist die Umhüllung ein Behälter zum Aufbewahren oder Transportieren von Sachen. Der Behälter kann beispielsweise aus Kunststoff sein und zur Aufbewahrung von Lebensmittel (insbesondere Speisen und Getränke) in Betracht kommen. Ein Behälter kann z. B. eine Dose sein.

Unter dem Begriff "Deckel" ist im Sinne der Erfindung ein Mittel zum Abdecken der Umhüllung zu verstehen, wobei das Mittel von der Umhüllung entfernbar ist (z. B. durch Aufklappen oder Abnehmen), wodurch die Beladung der Umhüllung mit einem Kabelstrang möglich wird. Die Abdeckung kann dabei vollständig oder teilweise erfolgen. Der Deckel kann beispielsweise plattenförmig oder halbrohrförmig sein. Denkbar ist auch ein bügelförmiger Deckel, der nur einen geringen Teil der Umhüllung abdeckt, aber im verschlossenen Zustand dafür sorgt, dass der Kabelstrang nicht aus der Deckelöffnung der Umhüllung austreten kann. In einer bevorzugten Ausführungsform sind Deckel und Umhüllung zwei separate Stücke. Alternativ können sie aber auch einstückig ausgebildet sein.

Der Steg dient als ein Mittelabschnitt, der mit der Umhüllung verbunden ist und mit dem die Seitenabschnitte verbunden sind. Der Steg ist an seinem ersten Ende mit dem der Umhüllung verbunden und erstreckt sich zu seinem zweiten Ende hin von der Umhüllung weg. Vorzugsweise ist der Steg dabei orthogonal zur Fläche der Umhüllung angeordnet, mit der er verbunden ist. Vorzugsweise weist die Aufnahme nur einen einzigen Steg auf, der an seinem ersten Ende mit der Umhüllung verbunden ist und sich zum zweiten Ende hin von der Umhüllung weg erstreckt und an dem die zwei Seitenabschnitte jeweils mit ihrem Ende verbunden sind. Vorzugsweise sind die zwei Seitenabschnitte nur mit dem einzigen Steg verbunden, der an seinem ersten Ende mit der Umhüllung verbunden ist und sich zum zweiten Ende hin von der Umhüllung weg erstreckt, und es ist kein anderes Element vorgesehen, dass die Seitenabschnitte mit der Umhüllung verbindet.

Unter erstem Ende des Stegs ist der Teil des Stegs zu verstehen, der mit der Umhüllung verbunden ist. Vorzugsweise ist der Steg im Wesentlichen quaderförmig, insbesondere bevorzugt plattenförmig. Unter einer Plattenform ist im Sinne der Erfindung eine Unterform der Quaderform zu verstehen, bei der die Dicke viel kleiner ist als die Länge und Breite. Bei einem quaderförmigen oder plattenförmigen Steg ist das erste Ende eine Seite des Quaders oder der Platte.

Die Seitenabschnitte sind jeweils an einem Ende mit dem Steg verbunden und erstrecken sich zum anderen Ende hin vom Steg weg. Dabei erstrecken sie sich in unterschiedliche Richtungen weg vom Steg. Vorzugsweise erstrecken sie sich in im Wesentlichen diametral unterschiedliche Richtungen. Besonders bevorzugt sind die Seitenabschnitte an dem zweiten Ende des Stegs verbunden. Dabei weisen die Seitenabschnitte und der Steg eine T-Anordnung auf (vergleichbar mit dem T-Stoß beim Schweißen).

Vorzugsweise sind die Seitenabschnitte quaderförmig oder plattenförmig, wobei besonders bevorzugt dabei auch der Steg quaderförmig oder plattenförmig ist. Besonders bevorzugt sind die Seitenabschnitte bei der T-Anordnung wie eine einheitliche Platte ausgebildet.

Der Deckel weist ein Einfügestück zum Einfügen in die Aufnahme auf. Das Einfügestück kann auch als Verschlusshaken bezeichnet werden. Vorzugsweise ist der Deckel mit dem Einfügestück einstückig ausgebildet, insbesondere bevorzugt aus einem Guss gefertigt, z. B. mit Kunststoff als Gusswerkstoff. Das Einfügestück weist ein deckelseitiges Ende auf, an dem es mit dem Deckel verbunden ist. Das Einfügestück weist ein deckelfernes Ende auf, das dazu vorgesehen ist, in die Aufnahme eingefügt zu werden.

In der eingerasteten Verbindung zwischen Einfügestück und Aufnahme befindet sich der Steg zwischen den Teilabschnitten. Zwischen den Teilabschnitten befindet sich somit ein Zwischenraum. Der Zwischenraum weist an dem deckelfernen Ende eine Öffnung auf, damit der Steg in den Zwischenraum aufgenommen werden kann und damit die Teilabschnitte tief genug in die Aufnahme eingeschoben werden können, um schließlich ein Einrasten zu ermöglichen.

Die Teilabschnitte erstrecken sich vom deckelseitigen zum deckelfernen Ende. Vorzugsweise sind die Teilabschnitte im Wesentlichen plattenförmig. Besonders bevorzugt liegen sie in einer Ebene.

Um eine feste Verbindung zwischen Einfügestück und Aufnahme zu gewährleisten, umfassen die Teilabschnitte jeweils ein Rastelement. Das Rastelement verhindert ein Herausschieben des Einfügestücks, wenn das Einfügestück soweit eingeschoben wird, bis jedes Rastelement einen Seitenabschnitt passiert hat. Beim Einschieben des Einfügestücks in die Aufnahme gleitet das Rastelement zunächst über die Seitenabschnitte. Nach dem Passieren der Seitenabschnitte schnappen dann die Rastelemente ein. Die Rastelemente sind vorzugsweise an dem deckelfernen Ende der Teilabschnitte angebracht.

### Als Rastelement kommt beispielsweise ein Rastelement, eine Rastfeder, ein Rasthaken, eine Sieke

In einer bevorzugten Ausführungsform ist die Aufnahme mit der Umhüllung einstückig ausgebildet. Besonders bevorzugt sind sie dabei durch Gießen gefertigt, wobei als Gusswerkstoff vorzugsweise Kunststoff verwendet wird. Anders als Kunststoffaufnahmen im Stand der Technik weisen aus Kunststoff hergestellte Aufnahmen gemäß der Erfindung eine deutlich geringere Bruchgefahr auf, was insbesondere auf eine fehlende Bindenaht zurückzuführen ist. Insbesondere bevorzugt ist die Aufnahme und die Umhüllung durch Spritzgießen gefertigt. Alternativ können die Aufnahme und die Umhüllung aus Metall bestehen. In einer alternativen Ausführungsform ist die Aufnahme und die Umhüllung durch Biegen und Stanzen gefertigt.

In einer bevorzugten Ausführungsform sind die Rastelemente derart abgeschrägt, dass ihre Breite in Einfügerichtung abnimmt.

Die Erfindung betrifft auch ein System mit einer erfindungsgemäßen Vorrichtung und einem länglichen Element oder einem Verbund von länglichen Elementen oder einem Abschnitt eines länglichen Elements oder eines Verbunds von länglichen Elementen, das/der in der Umhüllung angeordnet ist.

Nachfolgend wird die Erfindung anhand einer lediglich eine Ausführungsform der Erfindung darstellenden Zeichnungen näher erläutert. Darin zeigt:
- Fig. 1: die erfindungsgemäßen Vorrichtung in einer perspektivischen Ansicht im geschlossenen Zustand.
- Fig. 2: die erfindungsgemäßen Vorrichtung in einer perspektivischen Ansicht im geöffneten Zustand.

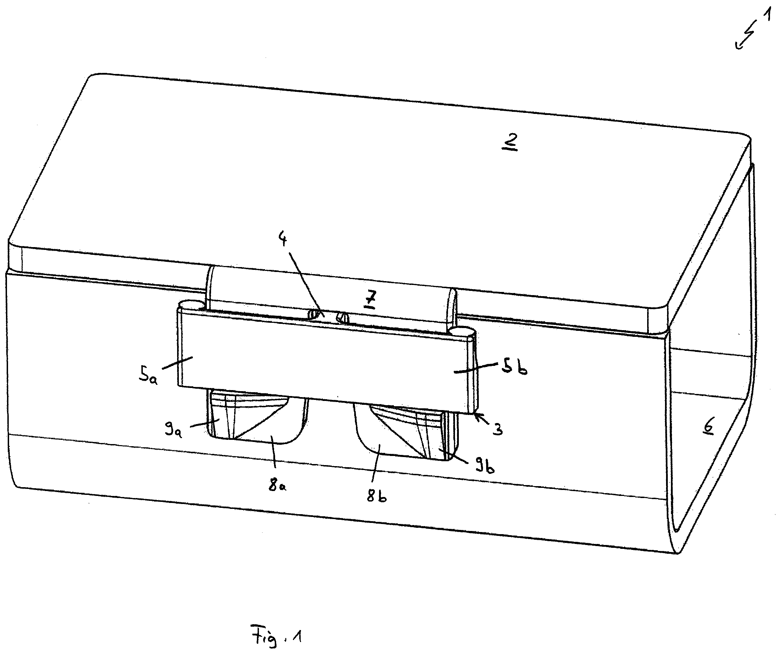

Figur 1 zeigt in perspektivischer Ansicht eine beispielhafte Ausführungsform der erfindungsgemäßen Vorrichtung 1 zur Aufnahme eines Kabelstrangs im verschlossenen Zustand. Die Vorrichtung 1 umfasst eine Umhüllung, die vorliegend ein Gehäuse ist. Das Gehäuse 6, das eine Aufnahme 3 mit einem Steg 4 aufweist. Aufnahme und Gehäuse sind einstückig ausgebildet und bestehen in diesem Beispiel aus Kunststoff, wobei sie durch Spritzgießen gefertigt worden sind. Der Steg 4 ist an seinem ersten Ende mit dem Gehäuse 6 verbunden und erstreckt sich zum zweiten Ende hin vom Gehäuse weg. Ferner weist die Aufnahme 3 zwei Seitenabschnitten 5a, 5b auf, die jeweils an einem Ende mit dem Steg 4 verbunden sind, sich zum anderen Ende hin vom Steg 4 weg erstrecken und sich in unterschiedliche Richtungen erstrecken. Die Seitenabschnitte 5a, 5b dieses Ausführungsbeispiels sind mit dem zweiten Ende des Stegs 4 verbunden und erstrecken sich in diametral unterschiedliche Richtungen.

Die Vorrichtung 1 umfasst des Weiteren einen Deckel 2, der ein Einfügestück 7 zum Einfügen in die Aufnahme 3 aufweist. Das Einfügestück 7 hat zwei Teilabschnitte 8a, 8b und jeder Teilabschnitt hat wiederum ein Rastelement, das im vorliegenden Beispiel eine Rastnase 9a, 9b ist. Die Vorrichtung 1 ist derart ausgebildet, dass das Einfügestück 7 in die Aufnahme 3 einschiebbar ist, wobei sich dann der Steg 4 zwischen den Teilabschnitten 8a, 8b befindet. Dabei verhindern dann die Rastnasen 9a, 9b ein Herausschieben des Einfügestücks 7, wenn das Einfügestück soweit eingeschoben wird, bis jede Rastnase 9a, 9b einen Seitenabschnitt 5a, 5b passiert hat. In dieser beispielhaften Ausführungsform, sind die Rastnasen derart abgeschrägt, dass ihre Breite in Einfügerichtung abnimmt.

Indem die Aufnahme 3 einen Steg 4 aufweist, der nur an seinem ersten Ende mit dem Gehäuse 6 verbunden ist und sich zum zweiten Ende hin vom Gehäuse 6 weg erstreckt, fließt beim Spritzgießen der flüssige Kunststoff lediglich über ein Ende in die Form der Aufnahme 3. Indem die Aufnahme ferner zwei Seitensegmente 5a, 5b aufweist, die jeweils an einem Ende mit dem Steg 4 verbunden sind, sich zum anderen Ende hin vom Steg 4 weg erstrecken und sich in unterschiedliche Richtungen erstrecken, zweigt sich der Strom des Gusswerkstoffes in zwei unterschiedliche Richtungen ab und die beiden Teilströme treffen sich nicht an einer anderen Stelle, sondern enden in den Formen für die jeweiligen Seitenabschnitte. Eine Bindenaht kann dadurch nicht entstehen und somit ist eine damit verbundene Bruchgefahr beseitigt. Zudem weist eine derartige Vorrichtung 1 insbesondere eine hohe Festigkeit auf und ist einfach zu bedienen (zu verbinden und zu lösen). Dicke Kabelstränge können auf diese Weise in das Gehäuse 6 förmlich gestaucht werden, ohne das die Gefahr besteht, dass das Schloss aufspringt. Dies hat den Vorteil, dass dadurch eine platzsparende Anbringung möglich ist und der Aufwand für Montage im Vergleich zu Schlössern aus dem Stand der Technik gering ist, was wiederum (vor allem bei Vielzahl von Montagevorgängen) zu deutlich geringeren Kosten führt.

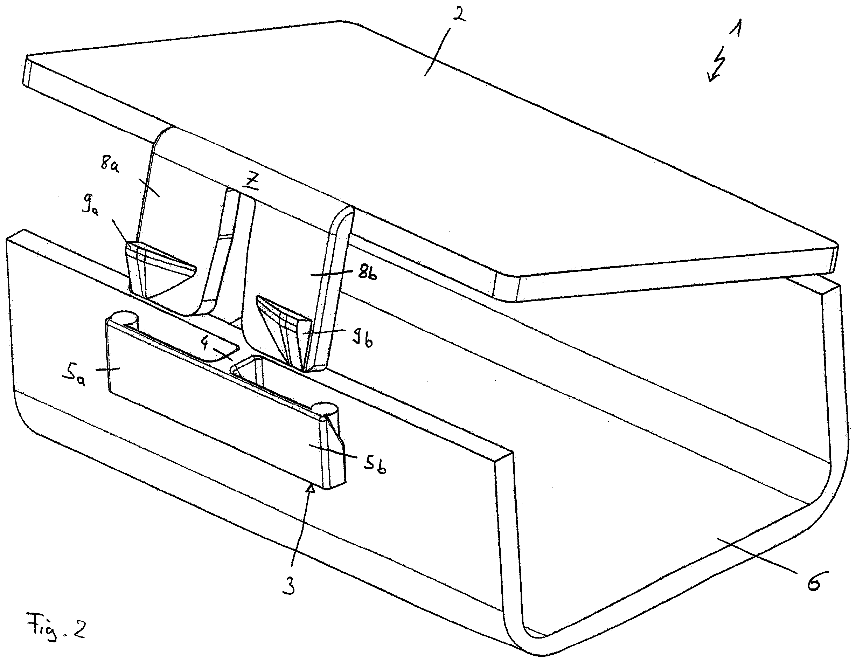

Fig. 2 zeigt die erfindungsgemäße Vorrichtung aus Figur 1, mit dem einzigen Unterschied, dass die Vorrichtung in einem geöffneten Zustand ist.

## Patentansprüche

1. Vorrichtung (1) zur Aufnahme eines Elements, insbesondere zur Aufnahme eines länglichen Elements oder eines Verbunds von länglichen Elementen, umfassend eine Umhüllung (6), **gekennzeichnet durch** eine Aufnahme (3) mit einem Steg (4), der an seinem ersten Ende mit der Umhüllung (6) verbunden ist und sich zum zweiten Ende hin von der Umhüllung (6) weg erstreckt, zwei Seitenabschnitten (5a, 5b), die jeweils an einem Ende mit dem Steg (4) verbunden sind, sich zum anderen Ende hin vom Steg (4) weg erstrecken und sich in unterschiedliche Richtungen erstrecken; einen Deckel (2), aufweisend ein Einfügestück (7) zum Einfügen in die Aufnahme (3), wobei das Einfügestück (7) zwei Teilabschnitte (8a, 8b) aufweist und jeder Teilabschnitt ein Rastelement (9a, 9b) aufweist; wobei die Vorrichtung (1) derart ausgebildet ist, dass das Einfügestück (7) in die Aufnahme (3) einschiebbar ist, wobei sich dann der Steg (4) zwischen den Teilabschnitten (8a, 8b) befindet, wobei die Rastelemente (9a, 9b) ein Herausschieben des Einfügestücks (7) verhindern, wenn das Einfügestück (7) soweit eingeschoben wird, bis jedes Rastelement (9a, 9b) einen Seitenabschnitt (5a, 5b) passiert hat.

2. Vorrichtung nach Anspruch 1, wobei die Umhüllung ein Gehäuse oder ein Behälter ist.

3. Vorrichtung (1) nach Anspruch 1 oder 2, wobei die Seitenabschnitte (5a, 5b) mit dem zweiten Ende des Stegs (4) verbunden sind.

4. Vorrichtung (1) nach Anspruch 1, 2 oder 3, wobei sich die Seitenabschnitte (5a, 5b) in diametral unterschiedliche Richtungen erstrecken.

5. Vorrichtung (1) nach einem der vorigen Ansprüche, wobei die Rastelemente (9a, 9b) derart abgeschrägt sind, dass ihre Breite in Einfügerichtung abnimmt.

6. Vorrichtung (1) nach einem der vorigen Ansprüche, wobei die Aufnahme (3) einstückig mit der Umhüllung (6) ausgebildet ist.

7. Vorrichtung (1) nach einem der vorigen Ansprüche, wobei die Aufnahme (3) und die Umhüllung (6) durch Gießen, insbesondere Spritzgießen, gefertigt sind.

8. Vorrichtung (1) nach einem der Ansprüche 1 bis 6, wobei die Aufnahme (3) und die Umhüllung (6) durch Biegen und Stanzen gefertigt sind.

9. Vorrichtung (1) nach einem der Ansprüche 1 bis 7, wobei die Aufnahme (3) und die Umhüllung (6) aus Kunststoff bestehen.

10. Vorrichtung (1) nach einem der Ansprüche 1 bis 6 oder 8, wobei die Aufnahme (3) und die Umhüllung (6) aus Metall bestehen.

11. System mit einer Vorrichtung (1) nach einem der Ansprüche 1 bis 9 und einem länglichen Element oder ein Verbund von länglichen Elementen oder einem Abschnitt eines länglichen Elements oder eines Verbunds von länglichen Elementen, das/der in der Umhüllung (6) angeordnet ist.

## Claims

1. Device (1) for accommodating an element, in particular for accommodating an elongate element or a composite of elongate elements, comprising an enclosure (6), **characterised by** a receptacle (3) having a web (4) which is connected at its first end to the enclosure (6) and extends away from the enclosure (6) towards the second end, two side sections (5a, 5b) which are each connected at one end to the web (4), extend away from the web (4) towards the other end and extend in different directions; a cover (2), having an insertion piece (7) for insertion into the receptacle (3), wherein the insertion piece (7) has two sub-sections (8a, 8b) and each sub-section has a locking element (9a, 9b); wherein the device (1) is designed such that the insertion piece (7) can be pushed into the receptacle (3), wherein the web (4) is then located between the sub-sections (8a, 8b), wherein the locking elements (9a, 9b) prevent the insertion piece (7) from being pushed out when the insertion piece (7) is pushed in until each locking element (9a, 9b) has passed a side section (5a, 5b).

2. Device according to claim 1, wherein the enclosure is a housing or a container.

3. Device (1) according to claim 1 or 2, wherein the side sections (5a, 5b) are connected to the second end of the web (4).

4. Device (1) according to claim 1, 2 or 3, wherein said side sections (5a, 5b) extend in diametrically different directions.

5. Device (1) according to any of the preceding claims, wherein the locking elements (9a, 9b) are chamfered in such a way that their width decreases in the insertion direction.

6. Device (1) according to any of the preceding claims, wherein the receptacle (3) is formed integrally with the enclosure (6).

7. Device (1) according to any of the preceding claims, wherein the receptacle (3) and the enclosure (6) are manufactured by moulding, in particular injection moulding.

8. Device (1) according to any of claims 1 to 6, wherein the receptacle (3) and the enclosure (6) are made by bending and punching.

9. Device (1) according to any of claims 1 to 7, wherein the receptacle (3) and the enclosure (6) are made of plastic.

10. Device (1) according to any of claims 1 to 6 or 8, wherein the receptacle (3) and the enclosure (6) are made of metal.

11. System having a device (1) according to any of claims 1 to 9 and an elongate element or a composite of elongate elements or a section of an elongate element or a composite of elongate elements arranged in the enclosure (6).

## Revendications

1. Dispositif (1) de réception d'un élément, en particulier de réception d'un élément allongé ou d'un ensemble d'éléments allongés, comprenant une enveloppe (6), **caractérisé par** une réception (3) comportant une nervure (4) qui est reliée, à sa première extrémité, à l'enveloppe (6) et qui s'étend vers la seconde extrémité en s'éloignant de l'enveloppe (6), deux sections latérales (5a, 5b) qui sont chacune reliées, à une extrémité, à la nervure (4), qui s'étendent vers l'autre extrémité en s'éloignant de la nervure (4) et qui s'étendent dans des directions différentes ; un couvercle (2), comprenant une pièce d'insertion (7) à insérer dans la réception (3), la pièce d'insertion (7) présentant deux sous-sections (8a, 8b), chaque sous-section présentant un élément d'encliquetage (9a, 9b) ; le dispositif (1) étant conçu de telle sorte que la pièce d'insertion (7) peut être insérée dans la réception (3), la nervure (4) se trouvant alors entre les sous-sections (8a, 8b), et les éléments d'encliquetage (9a, 9b) empêchant le retrait de la pièce d'insertion (7) lorsque ladite pièce d'insertion (7) est insérée jusqu'à ce que chaque élément d'encliquetage (9a, 9b) ait franchi une section latérale (5a, 5b).

2. Dispositif selon la revendication 1, dans lequel l'enveloppe est un boîtier ou un conteneur.

3. Dispositif (1) selon l'une des revendications 1 ou 2, dans lequel les sections latérales (5a, 5b) sont reliées à la seconde extrémité de la nervure (4).

4. Dispositif (1) selon l'une des revendications 1, 2 ou 3, dans lequel les sections latérales (5a, 5b) s'étendent dans des directions diamétralement différentes.

5. Dispositif (1) selon l'une quelconque des revendications précédentes, dans lequel les éléments d'encliquetage (9a, 9b) sont chanfreinés de telle sorte que leur largeur diminue dans la direction d'insertion.

6. Dispositif (1) selon l'une quelconque des revendications précédentes, dans lequel la réception (3) est réalisée d'une seule pièce avec l'enveloppe (6).

7. Dispositif (1) selon l'une quelconque des revendications précédentes, dans lequel la réception (3) et l'enveloppe (6) sont fabriquées par moulage, en particulier par moulage par injection.

8. Dispositif (1) selon l'une quelconque des revendications 1 à 6, dans lequel la réception (3) et l'enveloppe (6) sont fabriquées par pliage et par estampage.

9. Dispositif (1) selon l'une quelconque des revendications 1 à 7, dans lequel la réception (3) et l'enveloppe (6) sont en plastique.

10. Dispositif (1) selon l'une quelconque des revendications 1 à 6 ou 8, dans lequel la réception (3) et l'enveloppe (6) sont en métal.

11. Système comprenant un dispositif (1) selon l'une quelconque des revendications 1 à 9 et un élément allongé ou un ensemble d'éléments allongés ou une section d'un élément allongé ou d'un ensemble d'éléments allongés qui est disposé dans l'enveloppe (6).
